# EUROPEAN PATENT SPECIFICATION

(11) **EP 3 369 102 B1**
(45) Date of publication and mention of the grant of the patent: **11.12.2019**
(21) Application number: 16790720.3
(22) Date of filing: 25.10.2016
(51) Int. Cl.: H01F 38/14, H04B 5/00

(54) **WIRELESS POWER TRANSMISSION DEVICE AND ELECTRICAL APPARATUS**
VORRICHTUNG ZUR DRAHTLOSEN STROMÜBERTRAGUNG UND ELEKTRISCHE EINRICHTUNG
DISPOSITIF DE TRANSMISSION D'ÉNERGIE SANS FIL ET APPAREIL ÉLECTRIQUE

(30) Priority: 26.10.2015 CN 201520835503 U
(43) Date of publication of application: 05.09.2018
(73) Proprietor: Tyco Electronics (Shanghai) Co. Ltd., Shanghai 200131 (CN)
(72) Inventor: WANG, Shaoyong, Shanghai (CN); DAI, Feng, Shanghai (CN); SONG, Yuming, Shanghai (CN)
(74) Representative: Grünecker Patent- und Rechtsanwälte PartG mbB
(86) International application number: PCT/IB2016/056413
(87) International publication number: WO 2017/072659

(56) References cited:
- WO-A1-2008/043264
- JP-A- H 104 639
- JP-A- 2005 137 173
- US-A- 5 741 316

## Description

### CROSS-REFERENCE TO RELATED APPLICATION

This application claims the benefit of Chinese Patent Application No. CN2015208355030 filed on October 26, 2015 in the State Intellectual Property Office of China.

### BACKGROUND OF THE INVENTION

### Field of the Invention

Embodiments of the invention relate to a wireless power transmission device adapted to wirelessly transmit a power through an electromagnetic coupling and an electrical apparatus comprising the same.

### Description of the Related Art

In some application occasions such as household appliances, it is desired for a user to conveniently detach a component such as a cover, a door or the like of the household appliances to be cleaned while the cover or the door is provided with a human-computer interaction device such as a display screen, a press key or the like as necessary. Traditionally, a body of the household appliance is connected with the cover or the door by an electrical wire to power the human-computer interaction device thereon. By this wired power way, the user has to operate a connector for connecting the electrical wire when detaching the cover or the door. Thus, there is a short-circuit risk after cleaning the cover or the door. Therefore, a wireless power is a desired alternation.

In practical operation, an effect of the wireless power depends on sizes of coil assemblies, a distance between the coil assemblies and a motion manner thereof. When being applied on the above cover and door, a receiving coil assembly should be designed small enough to be conveniently incorporated into or removed from a transmitting coil assembly.

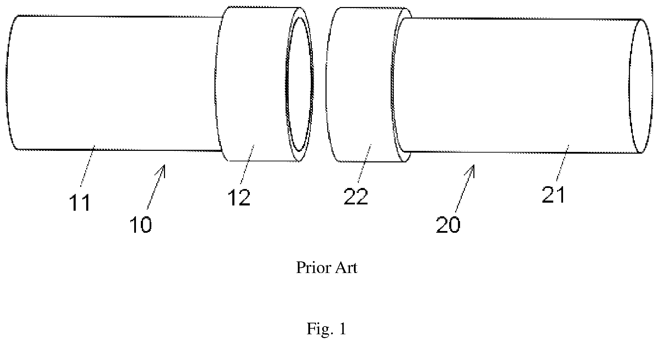

To achieve these objects, there is provided a wireless power transmission device in the prior art. As shown in Figure 1, the wireless power transmission device comprises a transmitting coil assembly 10 and a receiving coil assembly 20 magnetically coupled with the transmitting coil assembly 10. The transmitting coil assembly 10 includes a cylindrical first magnetic core 11 and a first coil winding 12 wound around one end of the first magnetic core 11. The receiving coil assembly 20 includes a cylindrical second magnetic core 21 and a second receiving coil winding 22 wound around one end of the second magnetic core 21. The transmitting coil assembly 10 is arranged opposite to and coaxial with the receiving coil assembly 20. Further, the transmitting coil assembly 10 is electromagnetically coupled with the receiving coil assembly 20 so as to achieve a wireless power transmission therebetween.

Although the coil structure shown in Figure 1 is very simple, when an outer diameter of the coil winding is no more than 15mm, the system only achieves an output voltage of 12V and a maximal output power of 5W when a distance between the coil windings is less than 3mm. This is because both the transmitting coil winding and the receiving coil winding have a small outer diameter, which may result in a very small coupling coefficient therebetween when the space is larger than 3mm.

JP2005131173 discloses a no-contact charged apparatus in which a battery is charged by the charger by means of electromagnetic induction by a primary coil built in the charger and a secondary coil built in an apparatus equipped with the battery. With this constitution, between both ends of a core of the primary coil, the rod-shaped core of the secondary coil is disposed so that both ends in the longitudinal direction may face both ends of the core.

JPH104639A discloses an apparatus consisting of a charged part which is equipped with a cover, rotatable around a pivot 6 and has a core for power receiving coil, where a power-receiving coil is wound, and a secondary battery built-in within and constitutes the main body of a portable communication apparatus, and a charging part which has a coil for a power-sending coil where a power-sending coil is wound, and the core for power-sending coil is constituted of a bar-form body.

US5741316 discloses compact transmitter coils and receiver coils having an improved transcutaneous power transfer efficiency. The transmitter coils are preferably applied to the outer surface of a cutaneous layer on a patient's body and held in place using adhesive tape or other appropriate supporting material. Implanted within the patient's body is a receiver coil.

WO2008043264 describes a light-emitting component package which includes a light-emitting component, a heat-conductor, a set of electric-conducting leads, and a heat dissipation base. The light-emitting component is disposed on the heat-conductor and electrically coupled to the set of electric-conducting leads. The heat-conductor is insulated from the set of electric-conducting leads and inserted in a hole of the heat dissipation base.

### SUMMARY OF THE INVENTION

The invention is intended to solve at least one of the above issues and defects existing in the prior arts.

The invention provides a wireless power transmission device having a relatively small size and strong electromagnetic coupling performance.

According to the present invention, there is provided a wireless power transmission device comprising: a transmitting coil assembly having a first magnetic core and a transmitting coil winding wound around the first magnetic core; and a receiving coil assembly having a second magnetic core and a receiving coil winding wound around the second magnetic core. The first magnetic core comprises a substantial U-shaped body portion, and a first pillar portion and a second pillar portion located at both ends of the U-shaped body portion, respectively, and extending toward each other. The transmitting coil winding comprises a first transmitting coil winding wound around the first pillar portion and a second transmitting coil winding wound around the second pillar portion. The first transmitting coil winding and the second transmitting coil winding are electrically connected with each other in series. The receiving coil windings wound around the second magnetic core comprise a first receiving coil winding wound around one end of the second magnetic core and a second receiving coil winding wound around the other end of the second magnetic core. The first receiving coil winding and the second receiving coil winding are electrically connected with each other in series. The receiving coil assembly is adapted to be interposed between the first pillar portion and the second pillar portion of the transmitting coil assembly so as to be electromagnetically coupled therewith.

Embodiments of the invention are defined in dependent claims 2-15.

In the wireless power transmission device according to various embodiments of the present invention, the wireless power transmission device has a relatively small size and a relatively strong electromagnetic coupling performance. Further, the wireless power transmission device still has an enough electromagnetic coupling coefficient when a space between the receiving coil windings and the transmitting coil windings is increased to 5mm, thereby achieving an output voltage no less than 12V and a maximal output power of 5W.

Other objects and advantages of the present invention will be apparent by the following description with reference to the accompanying drawings and will be helpful for a comprehensive understanding to the present invention.

### BRIEF DESCRIPTION OF THE DRAWINGS

The above and other features of the disclosure will become more apparent by describing in detail exemplary embodiments thereof with reference to the accompanying drawings, in which:
Figure 1 shows a schematic view of a wireless power transmission device in the prior art; and
Figure 2 shows a schematic view of a wireless power transmission device according to an embodiment of the present invention.

### DETAILED DESCRIPTION OF PREFERRED EMBODIMENTS OF THE

### INVENTION

The technical solutions of the disclosure will be described hereinafter in detail in exemplary embodiments with reference to the attached drawings. In the description, the same or similar reference numerals refer to the same or similar components. The description to the embodiments of the disclosure hereinafter with reference to the attached drawings is intended to explain the general inventive idea of the invention and should not be construed as being limitative to the disclosure.

In addition, in the below detail description, for easy to explain, many specific details are set forth to provide a complete understanding to the disclosure. However, one or more embodiments can be obviously carried out without these specific details. In other cases, well-known structures and devices are illustrated to simplify the drawings.

According to a general concept of the invention, there is provided a wireless power transmission device comprising: a transmitting coil assembly having a first magnetic core and a transmitting coil winding wound around the first magnetic core; and a receiving coil assembly having a second magnetic core and a receiving coil winding wound around the second magnetic core. The first magnetic core comprises a substantial U-shaped body portion, and a first pillar portion and a second pillar portion located at both ends of the U-shaped body portion, respectively, and extending toward each other. The transmitting coil winding comprises a first transmitting coil winding wound around the first pillar portion and a second transmitting coil winding wound around the second pillar portion. The first transmitting coil winding and the second transmitting coil winding are electrically connected with each other in series. The receiving coil windings wound around the second magnetic core comprise a first receiving coil winding wound around one end of the second magnetic core and a second receiving coil winding wound around the other end of the second magnetic core. The first receiving coil winding and the second receiving coil winding are electrically connected with each other in series. The receiving coil assembly is adapted to be interposed between the first pillar portion and the second pillar portion of the transmitting coil assembly so as to be electromagnetically coupled therewith.

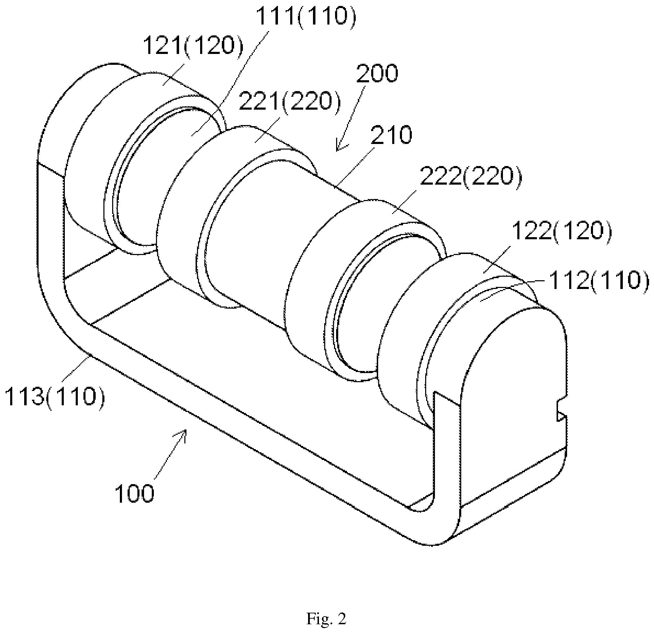

Figure 2 shows a schematic view of a wireless power transmission device according to an embodiment of the present invention.

In an embodiment of the present invention, there is provided a wireless power transmission device. As shown in Figure 2, the wireless power transmission device mainly comprises a transmitting coil assembly 100 and a receiving coil assembly 200. The receiving coil assembly 200 is adapted to be electromagnetically coupled with the transmitting coil assembly 100 in a non-contact manner to power a power consumption product such as an electronic product.

As shown in Figure 2, in the illustrated embodiment, the transmitting coil assembly 100 has a first magnetic core 110 and transmitting coil windings 120 wound around the first magnetic core 110. The receiving coil assembly 200 has a second magnetic core 210 and receiving coil windings 220 wound around the second magnetic core 210.

With continued reference to Figure 2, in the illustrated embodiment, the first magnetic core 110 includes a substantial U-shaped body portion 113, and a first pillar portion 111 and a second pillar portion 112 located at both free ends of the U-shaped body portion 113, respectively, and extending toward each other. In the illustrated embodiment, the first pillar portion 111 and the second pillar portion 112 are arranged to protrude inwardly from an open of the U-shaped body portion 113, respectively, to face each other. The transmitting coil windings 120 includes a first transmitting coil winding 121 wound around the first pillar portion 111 and a second transmitting coil winding 122 wound around the second pillar portion 112. The first transmitting coil winding 121 and the second transmitting coil winding 122 are electrically connected with each other in series, so that current flows in the same direction in the first transmitting coil winding 121 and the second transmitting coil winding 122.

With continued reference to Figure 2, in the illustrated embodiment, the second magnetic core 210 has a cylindrical shape. The receiving coil windings 220 includes a first receiving coil winding 221 wound around one end of the second magnetic core 210 and a second receiving coil winding 222 wound around the other end of the second magnetic core 210. The first receiving coil winding 221 and the second receiving coil winding 222 are electrically connected with each other in series, so that current flows in the same direction in the first receiving coil winding 221 and the second receiving coil winding 222.

In the illustrated embodiment, as shown in Figure 2, a length of the second magnetic core 210 is smaller than a space between the first pillar portion 111 and the second pillar portion 112 so that the receiving coil assembly 200 is adapted to be interposed between the first pillar portion 111 and the second pillar portion 112 of the transmitting coil assembly 100 so as to achieve electromagnetic couple with the transmitting coil assembly 100.

In an embodiment of the present invention, as shown in Figure 2, the first pillar portion 111 is arranged coaxial with the second pillar portion 112 and has the same diameter as that of the second pillar portion 112.

In an embodiment of the present invention, as shown in Figure 2, a diameter of the second magnetic core 210 is equal to that of each of the first pillar portion 111 and the second pillar portion 112 of the first magnetic core 110.

In an embodiment of the present invention, as shown in Figure 2, the U-shaped body portion 113 of the first magnetic core 110 includes a plate-like bottom and a pair of plate-like side arms located at both ends of the plate-like bottom.

In an embodiment of the present invention, as shown in Figure 2, a width of the U-shaped body portion 113 is equal to the diameter of each of the first pillar portion 111 and the second pillar portion 112.

In embodiment of the present invention, as shown in Figure 2, a length of the U-shaped body portion 113 of the first magnetic core 110 is no more than 48mm, and the width thereof is no more than 14mm. An outer diameter of the transmitting coil winding 120 is no more than 14mm, and an overall height of the transmitting coil assembly 100 is no more than 23mm. Further, the length of the second magnetic core 210 is no more than 20mm, and an outer diameter of the receiving coil winding 220 is no more than 14mm.

However, it is noted that the sizes of the first magnetic core 110, the transmitting coil windings 120, the second magnetic core 210 and the receiving coil windings 220 are not limited to the embodiments as described above and may be adjusted as desired.

In an embodiment of the present invention, as shown in Figure 2, the first transmitting coil winding 121 and the second transmitting coil winding 122 may be formed by winding a single wire such as a varnished wire. In another embodiment of the present invention, the first transmitting coil winding 121 and the second transmitting coil winding 122 may also be formed by winding two separated wires, and then the first transmitting coil winding 121 and the second transmitting coil winding 122 are electrically connected with each other in series by one wire. A winding direction of the first transmitting coil winding 121 may be same as or different from that of the second transmitting coil winding 122, as long as the current flows in the same direction in the first transmitting coil winding 121 and the second transmitting coil winding 122.

Similarly, as shown in Figure 1, the first receiving coil winding 221 and the second receiving coil winding 222 may be formed by winding a single wire such as a varnished wire. In another embodiment of the present invention, the first receiving coil winding 221 and the second receiving coil winding 222 may also be formed by winding two separated wires, and then the first receiving coil winding 221 and the second receiving coil winding 222 are electrically connected with each other in series by one wire. A winding direction of the first receiving coil winding 221 may be same as or different from that of the second receiving coil winding 222, as long as the current flows in the same direction in the first transmitting coil winding 121 and the second transmitting coil winding 122.

Although not illustrated, in another embodiment of the present invention, there is provided an electrical apparatus comprising a machine body, a cover plate/door plate and the wireless power transmission device as described above. The cover plate/door plate is rotatably mounted on the machine body. The transmitting coil assembly 100 of the above wireless power transmission device is mounted on one of the machine body and the cover plate/door plate, and the receiving coil assembly 200 is mounted on the other of the machine body and the cover plate/door plate.

In an embodiment of the present invention, when the cover plate/door plate is rotated to a closed position relative to the machine body, the receiving coil assembly 200 is interposed between the first pillar portion 111 and the second pillar portion 112 of the transmitting coil assembly 100 and electromagnetically coupled therewith, thereby powering a power consumption product of the electrical apparatus.

In an embodiment of the present invention, when the cover plate/door plate is rotated to an open position relative to the machine body, the receiving coil assembly 200 is moved outside the transmitting coil assembly 100 and electromagnetically discoupled therefrom, thereby stopping powering the power consumption product of the electrical apparatus.

In an embodiment of the present invention, both the transmitting coil assembly 100 and the receiving coil assembly 200 are mounted at a position close to a rotation axis of the cover plate/door plate.

In an embodiment of the present invention, the electrical apparatus may include a household appliance such as a washing machine or a refrigerator.

In an embodiment of the present invention, the transmitting coil assembly 100 is mounted on the machine body, and the receiving coil assembly 200 is mounted on the cover plate/door plate, so that the electronic product mounted on the cover plate/door plate is powered.

In an embodiment of the present invention, the electronic product mounted on the cover plate/door plate may include at least one of a display screen, a lamp and a press key.

In an embodiment of the present invention, in order to mount the transmitting coil assembly 100 and the receiving coil assembly 200 on the household appliance, both the transmitting coil assembly 100 and the receiving coil assembly 200 are designed very small in size. For example, as shown in Figure 2, a length of the U-shaped body portion 113 of the first magnetic core 110 is no more than 48mm, and the width thereof is no more than 14mm. An outer diameter of the transmitting coil windings 120 is no more than 14mm, and an overall height of the transmitting coil assembly 100 is no more than 23mm. Further, the length of the second magnetic core 210 is no more than 20mm, and an outer diameter of the receiving coil windings 220 is no more than 14mm.

In an embodiment of the present invention, in order to power the electronic product including the display screen, the lamp or the press key mounted on the cover plate/door plate, the wireless power transmission device is configured to support enough power supply voltage and supplied power. In an embodiment of the present invention, the above wireless power transmission device may provide a rated power supply voltage no less than 12V and a rated power no less than 5W.

It would be appreciated by those skilled in the art embodiments of the invention as described and shown above are exemplary and various changes or modifications may be made thereto by those skilled in the art without departing from the scope defined by claims. Further, structures described in various embodiments may be combined in any forms without conflicting with each other in structure or concept.

The Scope of the invention is only defined by the appended claims and any example not being an embodiment of the invention thus defined shall be regarded only for illustrating purposes.

It should be noted that phase "comprise" or "include" does not exclude other elements or steps, and the phrase "a" or "an" does not exclude multiple. In addition, any reference numerals in claims should not be construed as limiting the invention.

## Claims

1. A wireless power transmission device comprising:
a transmitting coil assembly (100) comprising:
a first magnetic core (110) comprising a substantial U-shaped body portion (113), and a first pillar portion (111) and a second pillar portion (112) located at both ends of the U-shaped body portion (113), respectively, and extending toward each other; and
a transmitting coil winding (120) comprising a first transmitting coil winding (121) wound around the first pillar portion (111) and a second transmitting coil winding (122) wound around the second pillar portion (112), the first transmitting coil winding (121) and the second transmitting coil winding (122) being electrically connected with each other in series; and
a receiving coil assembly (200) comprising:
a second magnetic core (210); and
a receiving coil winding (220) comprising a first receiving coil winding (221) wound around one end of the second magnetic core (210) and a second receiving coil winding (222) wound around the other end of the second magnetic core (210), the first receiving coil winding (221) and the second receiving coil winding (222) being electrically connected with each other in series, wherein the receiving coil assembly (200) is adapted to be interposed between the first pillar portion (111) and the second pillar portion (112) of the transmitting coil assembly (100) so as to be electromagnetically coupled therewith.

2. The wireless power transmission device according to claim 1, wherein the wireless power transmission device is adapted to have current which flows in the same direction in the first transmitting coil winding (121) and the second transmitting coil winding (122); and current which flows in the same direction in the first receiving coil winding (221) and the second receiving coil winding (222).

3. The wireless power transmission device according to claim 2,
wherein the first pillar portion (111) is arranged coaxial with the second pillar portion (112) and has the same diameter as that of the second pillar portion (112).

4. The wireless power transmission device according to claim 3, wherein a diameter of the second magnetic core (210) is equal to that of each of the first pillar portion (111) and the second pillar portion (112) of the first magnetic core (110).

5. The wireless power transmission device according to claim 4, wherein the U-shaped body portion (113) of the first magnetic core (110) comprises a plate-like bottom and a pair of plate-like side arms located at both ends of the plate-like bottom.

6. The wireless power transmission device according to claim 5, wherein a width of the U-shaped body portion (113) is equal to the diameter of each of the first pillar portion (111) and the second pillar portion (112).

7. The wireless power transmission device according to claim 6, wherein
a length of the U-shaped body portion (113) of the first magnetic core (110) is no more than 48mm, and the width thereof is no more than 14mm;
an outer diameter of the transmitting coil winding (120) is no more than 14mm, and an overall height of the transmitting coil assembly (100) is no more than 23mm; and
the length of the second magnetic core (210) is no more than 20mm, and an outer diameter of the receiving coil winding (220) is no more than 14mm.

8. The wireless power transmission device according to claim 1, wherein the first transmitting coil winding (121) and the second transmitting coil winding (122) are formed by winding a single wire.

9. The wireless power transmission device according to claim 1, wherein the first transmitting coil winding (121) and the second transmitting coil winding (122) are formed by winding two separated wires.

10. An electrical apparatus comprising:
a machine body; and
a cover plate or door plate rotatably mounted on the machine body,
wherein the electrical apparatus further comprises the wireless power transmission device according to claim 1, the transmitting coil assembly (100) is mounted on one of the machine body and the cover plate or door plate, and the receiving coil assembly (200) is mounted on the other of the machine body and the cover plate or door plate;
wherein when the cover plate or door plate is rotated to a closed position relative to the machine body, the receiving coil assembly (200) is interposed between the first pillar portion (111) and the second pillar portion (112) of the transmitting coil assembly (100) and electromagnetically coupled therewith; and
wherein when the cover plate or door plate is rotated to an open position relative to the machine body, the receiving coil assembly (200) is moved outside the transmitting coil assembly (100) and electromagnetically discoupled therefrom.

11. The electrical apparatus according to claim 10, wherein both the transmitting coil assembly (100) and the receiving coil assembly (200) are mounted at a position close to a rotation axis of the cover plate or door plate.

12. The electrical apparatus according to claim 11, wherein the electrical apparatus comprises a household appliance.

13. The electrical apparatus according to claim 12, wherein the transmitting coil assembly (100) is mounted on the machine body, and the receiving coil assembly (200) is mounted on the cover plate or door with an electronic product mounted on the cover plate or door plate to be powered.

14. The electrical apparatus according to claim 13, wherein the electronic product mounted on the cover plate or door plate comprises at least one of a display screen, a lamp and a press key.

15. The electrical apparatus according to claim 14, wherein the wireless power transmission device has a rated power supply voltage no less than 12V and a rated power no less than 5W.

## Patentansprüche

1. Vorrichtung für drahtlose Energieübertragung, die umfasst:
eine Sende-Spulenanordnung (100), die umfasst:
einen ersten Magnetkern (110), der einen wesentlichen U-förmigen Körperabschnitt (113) sowie einen ersten Säulenabschnitt (111) und einen zweiten Säulenabschnitt (112) umfasst, die jeweils an beiden Enden des U-förmigen Körperabschnitts (113) angeordnet sind und sich aufeinander zu erstrecken; sowie
eine Sende-Spulenwicklung (120), die eine erste Sende-Spulenwicklung (121), die um den ersten Säulenabschnitt (111) herum gewickelt ist, und eine zweite Sende-Spulenwicklung (122) umfasst, die um den zweiten Säulenabschnitt (112) herum gewickelt ist, wobei die erste Sende-Spulenwicklung (121) und die zweite Sende-Spulenwicklung (122) elektrisch in Reihe miteinander verbunden sind; sowie
eine Empfangs-Spulenanordnung (200), die umfasst:
einen zweiten Magnetkern (210); und
eine Empfangs-Spulenwicklung (220), die eine erste Empfangs-Spulenwicklung (221), die um ein Ende des zweiten Magnetkerns (210) herum gewickelt ist, sowie eine zweite Empfangs-Spulenwicklung (222) umfasst, die um das andere Ende des zweiten Magnetkerns (210) herum gewickelt ist, wobei die erste Empfangs-Spulenwicklung (221) und die zweite Empfangs-Spulenwicklung (222) elektrisch in Reihe miteinander verbunden sind,
wobei die Empfangs-Spulenanordnung (200) so eingerichtet ist, dass sie zwischen dem ersten Säulenabschnitt (111) und dem zweiten Säulenabschnitt (112) der Sende-Spulenanordnung (100) so angeordnet ist, dass sie elektromagnetisch damit gekoppelt ist.

2. Vorrichtung für drahtlose Energieübertragung nach Anspruch 1, wobei
die Vorrichtung für drahtlose Energieübertragung so eingerichtet ist, dass sie Strom, der in der ersten Sende-Spulenwicklung (121) und der zweiten Sende-Spulenwicklung (122) in der gleichen Richtung fließt; und
Strom aufweist, der in der ersten Empfangs-Spulenwicklung (221) und der zweiten Empfangs-Spulenwicklung (222) in der gleichen Richtung fließt.

3. Vorrichtung für drahtlose Energieübertragung nach Anspruch 2,
wobei der erste Säulenabschnitt (111) koaxial zu dem zweiten Säulenabschnitt (112) angeordnet ist und den gleichen Durchmesser hat wie der zweite Säulenabschnitt (112).

4. Vorrichtung für drahtlose Energieübertragung nach Anspruch 3, wobei ein Durchmesser des zweiten Magnetkerns (210) jeweils genauso groß ist wie der des ersten Säulenabschnitts (111) und des zweiten Säulenabschnitts (112) des ersten Magnetkerns (110).

5. Vorrichtung für drahtlose Energieübertragung nach Anspruch 4, wobei der U-förmige Körperabschnitt (113) des ersten Magnetkerns (110) einen plattenartigen Boden und ein Paar plattenartiger Seitenarme umfasst, die sich an beiden Enden des plattenartigen Bodens befinden.

6. Vorrichtung für drahtlose Energieübertragung nach Anspruch 5, wobei eine Breite des U-förmigen Körperabschnitts (113) jeweils genauso groß ist wie der Durchmesser des ersten Säulenabschnitts (111) und des zweiten Säulenabschnitts (112).

7. Vorrichtung für drahtlose Energieübertragung nach Anspruch 6, wobei
eine Länge des U-förmigen Körperabschnitts (113) des ersten Magnetkerns (110) nicht größer ist als 48 mm und seine Breite nicht größer ist als 14 mm;
ein Außendurchmesser der Sende-Spulenwicklung (120) nicht größer ist als 14 mm und eine Gesamthöhe der Sende-Spulenanordnung (100) nicht größer ist als 23 mm; und
die Länge des zweiten Magnetkerns (210) nicht größer ist als 20 mm und ein Außendurchmesser der Empfangs-Spulenwicklung (220) nicht größer ist als 14 mm.

8. Vorrichtung für drahtlose Energieübertragung nach Anspruch 1, wobei die erste Sende-Spulenwicklung (121) und die zweite Sende-Spulenwicklung (122) durch Wickeln eines einzelnen Drahtes hergestellt werden.

9. Vorrichtung für drahtlose Energieübertragung nach Anspruch 1, wobei die erste Sende-Spulenwicklung (121) und die zweite Sende-Spulenwicklung (122) durch Wickeln zweier getrennter Drähte hergestellt werden.

10. Elektrisches Gerät, das umfasst:
einen Maschinenkörper; sowie
eine Abdeckplatte oder Türplatte, die drehbar an dem Maschinenkörper angebracht ist,
wobei das elektrische Gerät des Weiteren die Vorrichtung für drahtlose Energieübertragung nach Anspruch 1 umfasst, die Sende-Spulenanordnung (100) an dem Maschinenkörper oder der Abdeckplatte oder Türplatte montiert ist und die Empfangs-Spulenanordnung (200) an dem anderen Element von dem Maschinenkörper und der Abdeckplatte oder Türplatte angebracht ist;
wobei, wenn die Abdeckplatte oder Türplatte an eine geschlossene Position relativ zu dem Maschinenkörper gedreht wird, die Empfangs-Spulenanordnung (200) zwischen dem ersten Säulenabschnitt (111) und dem zweiten Säulenabschnitt (112) der Sende-Spulenanordnung (100) angeordnet und elektromagnetisch damit gekoppelt ist; und
wenn die Abdeckplatte oder Türplatte an eine geöffnete Position relativ zu dem Maschinenkörper gedreht wird, die Empfangs-Spulenanordnung (200) aus der Sende-Spulenanordnung (100) heraus bewegt und elektromagnetisch von ihr entkoppelt wird.

11. Elektrisches Gerät nach Anspruch 10, wobei sowohl die Sende-Spulenanordnung (100) als auch die Empfangs-Spulenanordnung (200) an einer Position nahe an einer Drehachse der Abdeckplatte oder Türplatte montiert sind.

12. Elektrisches Gerät nach Anspruch 11, wobei das elektrische Gerät ein Haushaltsgerät umfasst.

13. Elektrisches Gerät nach Anspruch 12, wobei die Sende-Spulenanordnung (100) an dem Maschinenkörper angebracht ist und die Empfangs-Spulenanordnung (200) an der Abdeckplatte oder Türplatte montiert ist, so dass ein an der Abdeckplatte oder Türplatte montiertes elektronisches Erzeugnis mit Strom versorgt wird.

14. Elektrisches Gerät nach Anspruch 13, wobei das an der Abdeckplatte oder der Türplatte montierte elektronische Erzeugnis einen Anzeige-Bildschirm, eine Leuchte oder/und eine Drucktaste umfasst.

15. Elektrisches Gerät nach Anspruch 14, wobei die Vorrichtung für drahtlose Energieübertragung eine Nennleistungs-Versorgungsspannung von nicht weniger als 12V und eine Nennleistung von nicht weniger als 5W hat.

## Revendications

1. Dispositif de transmission d'énergie sans fil comprenant :
un ensemble de bobine de transmission (100) comprenant :
un premier noyau magnétique (110) comprenant une partie de corps sensiblement en forme de U (113), et une première partie de pilier (111) et une seconde partie de pilier (112) situées aux deux extrémités de la partie de corps en forme de U (113), respectivement, et s'étendant l'un vers l'autre ; et
un enroulement de bobine de transmission (120) comprenant un premier enroulement de bobine de transmission (121) enroulé autour de la première partie de pilier (111) et un second enroulement de bobine de transmission (122) enroulé autour de la seconde partie de pilier (112), le premier enroulement de bobine de transmission (121) et le second enroulement de bobine de transmission (122) étant connectés électriquement l'un à l'autre en série ; et
un ensemble de bobine de réception (200) comprenant :
un second noyau magnétique (210) ; et
un enroulement de bobine de réception (220) comprenant un premier enroulement de bobine de réception (221) enroulé autour d'une extrémité du second noyau magnétique (210) et un second enroulement de bobine de réception (222) enroulé autour de l'autre extrémité du second noyau magnétique (210), le premier enroulement de bobine de réception (221) et le second enroulement de bobine de réception (222) étant connectés électriquement l'un à l'autre en série,
dans lequel l'ensemble de bobine de réception (200) est adapté pour être interposé entre la première partie de pilier (111) et la seconde partie de pilier (112) de l'ensemble de bobine de transmission (100) de manière à être couplé électromagnétiquement à celui-ci.

2. Dispositif de transmission d'énergie sans fil selon la revendication 1, dans lequel le dispositif de transmission d'énergie sans fil est adapté pour avoir un courant qui circule dans la même direction dans le premier enroulement de bobine de transmission (121) et le second enroulement de bobine de transmission (122) ; et
un courant qui circule dans la même direction dans le premier enroulement de bobine de réception (221) et le second enroulement de bobine de réception (222).

3. Dispositif de transmission d'énergie sans fil selon la revendication 2,
dans lequel la première partie de pilier (111) est agencée de manière coaxiale avec la seconde partie de pilier (112) et a le même diamètre que celui de la second partie de pilier (112).

4. Dispositif de transmission d'énergie sans fil selon la revendication 3, dans lequel un diamètre du second noyau magnétique (210) est égal à celui de chacune des première partie de pilier (111) et seconde partie de pilier (112) du premier noyau magnétique (110).

5. Dispositif de transmission d'énergie sans fil selon la revendication 4, dans lequel la partie de corps en forme de U (113) du premier noyau magnétique (110) comprend un fond en forme de plaque et une paire de bras latéraux en forme de plaque situés aux deux extrémités du fond en forme de plaque.

6. Dispositif de transmission d'énergie sans fil selon la revendication 5, dans lequel une largeur de la partie de corps en forme de U (113) est égale au diamètre de chacune des première partie de pilier (111) et seconde partie de pilier (112).

7. Dispositif de transmission d'énergie sans fil selon la revendication 6, dans lequel une longueur de la partie de corps en forme de U (113) du premier noyau magnétique (110) n'est pas supérieure à 48 mm, et sa largeur n'est pas supérieure à 14 mm ;
un diamètre extérieur de l'enroulement de bobine de transmission (120) n'est pas supérieur à 14 mm, et une hauteur totale de l'ensemble de bobine de transmission (100) n'est pas supérieure à 23 mm ; et
la longueur du second noyau magnétique (210) n'est pas supérieure à 20 mm, et un diamètre extérieur de l'enroulement de bobine de réception (220) n'est pas supérieur à 14 mm.

8. Dispositif de transmission d'énergie sans fil selon la revendication 1, dans lequel le premier enroulement de bobine de transmission (121) et le second enroulement de bobine de transmission (122) sont formés en enroulant un fil unique.

9. Dispositif de transmission d'énergie sans fil selon la revendication 1, dans lequel le premier enroulement de bobine de transmission (121) et le second enroulement de bobine de transmission (122) sont formés en enroulant deux fils séparés.

10. Appareil électrique comprenant :
un corps de machine ; et
une plaque de couvercle ou plaque de porte montée de manière rotative sur le corps de machine,
dans lequel l'appareil électrique comprend en outre le dispositif de transmission d'énergie sans fil selon la revendication 1, l'ensemble de bobine de transmission (100) étant monté sur l'un parmi le corps de machine et la plaque de couvercle ou plaque de porte, et l'ensemble de bobine de réception (200) étant monté sur l'autre parmi le corps de machine et la plaque de couvercle ou plaque de porte,
dans lequel lorsque la plaque de couvercle ou plaque de porte est tournée vers une position fermée par rapport au corps de machine, l'ensemble de bobine de réception (200) est interposé entre la première partie de pilier (111) et la seconde partie de pilier (112) de l'ensemble de bobine de transmission (100) et couplé électromagnétiquement à celui-ci ; et
dans lequel lorsque la plaque de couvercle ou plaque de porte est tournée vers une position ouverte par rapport au corps de machine, l'ensemble de bobine de réception (200) est déplacé à l'extérieur de l'ensemble de bobine de transmission (100) et est découplé électromagnétiquement de celui-ci.

11. Appareil électrique selon la revendication 10, dans lequel l'ensemble de bobine de transmission (100) et l'ensemble de bobine de réception (200) sont tous deux montés à une position proche d'un axe de rotation de la plaque de couvercle ou plaque de porte.

12. Appareil électrique selon la revendication 11, dans lequel l'appareil électrique comprend un équipement électroménager.

13. Appareil électrique selon la revendication 12, dans lequel l'ensemble de bobine de transmission (100) est monté sur le corps de machine, et l'ensemble de bobine de réception (200) est monté sur la plaque de couvercle ou plaque de porte avec un composant électronique monté sur la plaque de couvercle ou plaque de porte pour être alimenté en énergie.

14. Appareil électrique selon la revendication 13, dans lequel le composant électronique monté sur la plaque de couvercle ou plaque de porte comprend au moins un écran d'affichage, une lampe et une touche à pression.

15. Appareil électrique selon la revendication 14, dans lequel le dispositif de transmission de puissance sans fil a une tension d'alimentation nominale qui n'est pas inférieure à 12 V et une puissance nominale qui n'est pas inférieure à 5 W.
